# EUROPÄISCHE PATENTSCHRIFT

(11) **EP 2 353 357 B1**
(45) Veröffentlichungstag und Bekanntmachung des Hinweises auf die Patenterteilung: **12.09.2012**
(21) Anmeldenummer: 11401011.9
(22) Anmeldetag: 26.01.2011
(51) Int. Cl.: A01C 7/08, A01C 7/10

(54) **Nachfüllsystem**
Refilling system
Système de réapprovisionnement

(30) Priorität: 28.01.2010 DE 102010000237
(43) Veröffentlichungstag der Anmeldung: 10.08.2011
(73) Patentinhaber: Amazonen-Werke H. Dreyer GmbH & Co. KG, 49205 Hasbergen (DE)
(72) Erfinder: Wilken, Martin, 26409, Wittmund (DE); Mertens, Daniel, 26123, Oldenburg (DE)

(56) Entgegenhaltungen:
- EP-A2- 2 044 827
- DE-A1-102004 038 258
- GB-A- 2 307 680
- US-A- 4 779 765

## Beschreibung

Die Erfindung betrifft ein Nachfüllsystem für mehrere mit einem Überdruck beaufschlagte, jeweils einen Saatgutvorratsbehälter aufweisenden Sägehäuse beaufschlagten Sägehäuse einer landwirtschaftlichen Sämaschine.

Derartige Nachfüllsysteme werden eingesetzt, wenn die den Vereinzelungsorganen zugeordneten Vorratsbehälter ein relativ kleines Fassungsvermögen aufweisen, wobei die Vereinzelungsorgane entweder in einem Bereich angeordnet sind, die keine größere Ausgestaltung der Vorratsbehälter zulassen oder die Vereinzelungsorgane mit den zugeordneten Vorratsbehältern dezentral angeordnet sind. Um dennoch eine große Arbeitsleistung ohne Unterbrechung der Arbeit zu erreichen, müssen die Vorratsbehälter nachgefüllt werden. Hierzu werden derartige Verteilmaschinen mit einem zentralen größeren Vorratstank ausgestattet, von dem aus über mechanische oder pneumatische Fördereinrichtungen die den Vereinzelungsorganen zugeordneten Vorratsbehälter während des Arbeits- oder Ausbringvorganges, ohne den Arbeitsvorgang an sich zu unterbrechen, kontinuierlich oder diskontinuierlich nachgefüllt werden. Ein solches Nachfüllsystem ist aus dem Dokument EP 2 044 827 bekannt.

Das Problem besteht nun jedoch darin, wenn derartige Vorratsbehälter, die Vereinzelungsorganen zugeordnet sind, die mit einem Überdruck beaufschlagt sind und das Vereinzelungsorgan ebenfalls mit einer Druckdifferenz beaufschlagt ist, während des Ausbringvorganges ohne Unterbrechung der Arbeit nachgefüllt werden sollen.

Derartige mit einem Überdruck beaufschlagte Vorratsbehälter müssen zur Erzeugung der Differenz für das Vereinzelungsorgan, um eine sichere Vereinzelung der Saatkörner zu gewährleisten mit einem relativ hohen Druck beaufschlagt werden, so dass es schwierig ist, mit einer pneumatisch beaufschlagten Nachfüllleitung mit Überdruck beaufschlagte Vorratsbehälter ohne Störung den auf einer Druckdifferenz beruhenden Vereinzelungsvorgang den Nachfüllvorgang durchzuführen.

Der Erfindung liegt daher die Aufgabe zugrunde, ein Nachfüllsystem für zumindest ein mit einem Überdruck beaufschlagten Vorratsbehälter und mit einer Druckdifferenz beaufschlagtes Vereinzelungsorgan ausgestatteten Vorratsbehälter einer landwirtschaftlichen Verteilmaschine in möglichst einfacher Weise auch während des Vereinzelungs - und/oder Ausbringungsvorganges zu ermöglichen.

Diese Aufgabe wird erfindungsgemäß durch die Merkmale des Anspruches 1 gelöst. Infolge dieser Maßnahme ist eine kontinuierliche Nachförderung des Saatgutes in den Vorratsbehälter in dem Bereich des Vereinzelungs, Sä - und/oder Dosierorgans im Sägehäuse auch während des Vereinzelungs- und/oder Ausbringvorganges möglich. Hierdurch wird die kontinuierliche Nachförderung während des Vereinzelung- und Sävorganges dadurch möglich, dass die benötigte Luft zur Erzeugung der Druckdifferenz zur Vereinzelung oder Ausbringung der Saatkörner gleichzeitig zur Nachfüllung genutzt wird. Durch den entsprechend ausreichend hohen Luftdruck in der Nachfüllleitung, die dem Luftdruck zur Erzeugung der Druckdifferenz an den Dosiervorrichtungen entspricht, ist es also in überraschender Weise möglich, kontinuierlich während des Vereinzelungs- und/oder Sävorganges das Saatgut kontinuierlich nachzufördern. Diese kontinuierliche Förderung des Saatgutes ist dadurch möglich, dass der von der Nachfüllleitung erzeugte Luftdruck dem Luftdruck im Dosierbereich während des Ausbringvorganges zumindest annähernd entspricht. Die zur Nachfüllung des Saatgutes genutzte Luft wird somit energetisch zur Erzeugung der Druckdifferenz weiter genutzt.

Weiterhin lässt sich entsprechend der Steuerung sicherstellen, dass sich immer ausreichend auszubringendes Saatgut oberhalb des Saatgutvorratsbehälterbereiches im Sägehäuse befindet. Weiterhin wird bei diesem Nachfüllsystem durch die über die Nachfüllleitung dem System zugeförderte Luft ein ausreichender Druckunterschied an der Dosiereinrichtung sichergestellt, wenn es sich um eine pneumatische Einzelkornsämaschine handelt. Hierbei ist auch sichergestellt, dass über die Nachfüllleitung Material erst in den Saatgutvorratsbehälter aus dem Vorratsbehälter zugeführt wird, wenn der festgelegte Mindestdruck, d.h. ein ausreichender Druckunterschied an der Dosiereinrichtung vorhanden ist.

Bei der Versorgung von mehreren Saatgutvorratsbehältern, die aufgrund der Ausbringbedingungen unterschiedlich schnell geleert wird, damit ein vorschriftsmäßiges Nachfüllen in dem Saatgutvorratsbehälter sichergestellt ist, ist vorgesehen, dass den Saatgutvorratsbehältern Füllstandsmelder zugeordnet sind, dass in Abhängigkeit von den Füllstandsmeldern die Antriebsvorrichtung für die Dosierelemente des Zentraldosierers ein- und ausschaltbar ist und/oder mittels der Verstelleinrichtung die verstellbare Leitwand verstellbar ist.

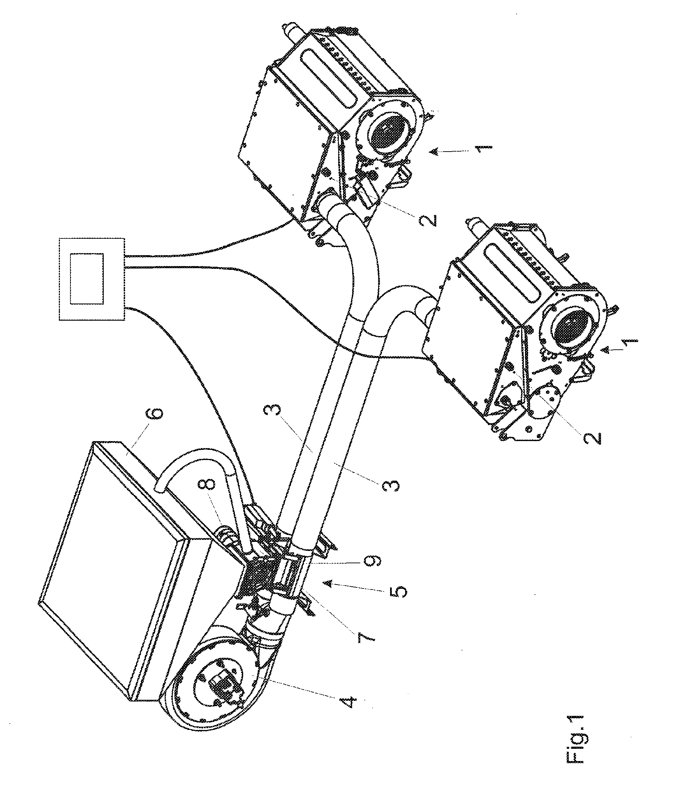

Weitere Einzelheiten der Erfindung sind der Beispielsbeschreibung und den Zeichnungen zu entnehmen. Hierbei zeigen
- Fig. 1: ein erfindungsgemäßes Nachfüllsystem für eine Verteilmaschine in Prinzipdarstellung,
- Fig. 2: das Nachfüllsystem gemäß Fig. 1 in schematischer Darstellung und
- Fig. 3: der unterhalb des Zentraldosierers angeordnete Schleusenbereich in perspektivischer Darstellung.

Das erfindungsgemäße Nachfüllsystem für den Saatgutvorratsbereich einer als Einzelkornsämaschine ausgebildeten Sä- und/oder Verteilmaschine, die mit einem Drucksystem arbeitet, weist die in einem als Vereinzelungsgehäuse ausgebildeten Sägehäuse 1 angeordnete und als Vereinzelungstrommel ausgebildete Dosiereinrichtung, einen Vorratsbehälter 2, die pneumatisch beaufschlagten Nachfüllleitungen 3 auf. Die Nachfüllleitungen 3 werden von einem motorisch angetriebenen Gebläse 4 mit einem Luftüberdruck gegenüber dem Atmosphärendruck beaufschlagt.

Die Vereinzelungstrommel der Dosiereinrichtung weist in bekannter und daher nicht näher dargestellter Weise in Perforationsreihen angeordnete Perforationen auf, die aufgrund über die Nachfüllleitung 3 zugeführte Luft mit einer Druckdifferenz gegenüber dem Atmosphärendruck beaufschlagt werden. An den Perforationen der Vereinzelungstrommel der Dosiereinrichtung lagern sich aufgrund der anliegenden Druckdifferenz die Saatkörner aus dem Saatgutvorrat des Saatgutvorratsbereiches des Saatgutvorratsbehälters 2 innerhalb des Vereinzelungsgehäuses 1 an.

Mittels des von dem Gebläse 4 erzeugten Luftstromes und des hieraus resultierenden Luftdruckes, der über die Nachfüllleitung 3 in den Vereinzelungsbereich des Vereinzelungsgehäuses 2 geleitet wird, wird die erforderliche Druckdifferenz an den Perforationen der Vereinzelungstrommel erzeugt. Den Nachfüllleitungen 3 ist jeweils eine Eingabeschleuse 5 zugeordnet, über welche das sich in dem Vorratsbehälter 4, der getrennt von dem Vereinzelungsgehäusen 1 angeordnet ist, über eine als Zentraldosierer 7 Dosiervorrichtung das sich in dem Vorratsbehälter 6 befindliche Saatgut in die jeweilige Nachfüllleitung 3 eingespeist wird. Mittels der pneumatischen Nachfüllleitung 3 wird ein ständig aufrecht erhaltener Überdruck in dem Vereinzelungsbereich 9 des Vereinzelungsgehäuses in dieser Weise erzeugt, um die Druckdifferenz an den Perforationen der Vereinzelungstrommel zu erzeugen. Somit wird über die jeweilige Nachfüllleitung 3 in ununterbrochener Weise zumindest teilweise die an den Perforationen der Vereinzelungstrommel anliegende Druckdifferenz. Der von der Nachfüllleitung 3 erzeugte Luftdruck entspricht dem Luftdruck im Vereinzelungsbereich der Trommel während des Vereinzelungsvorganges der Saatkörner bei der Ausbringarbeit.

Wie sich aus dem vorhergehenden ergibt, mündet die jeweilige Nachfüllleitung 3 unmittelbar ohne Zwischenschaltung eines gegenüber dem Saatgutvorratsbehälter 2 des Vereinzelungsgehäuses 1 absperrbaren Zwischenbehälters im oberen Bereich des Vereinzelungsgehäuses 1 aus.

Der Zentraldosierer 7 wird von einer als Elektromotor 8 ausgebildeten Antriebsvorrichtung angetrieben.

Zwischen den Schleusen 5 und der Dosiervorrichtung 7 ist ein Einlauftrichter 9 angeordnet, der mittels einer verstellbaren Leitwand 10 in zwei Teile aufgeteilt wird. Somit ist diese verstellbare Leitwand 10 zwischen den Schleusen 5 der Nachfüllleitungen 3 und der Dosiervorrichtung 7 angeordnet. Die Leitwand 10 ist mittels eines Gelenkes 11 im unteren Bereich des Trichters 9 gelenkig angeordnet. Die Leitwand 10 wird mittels einer als Elektrostellantrieb 12 ausgebildeten motorischen Verstelleinrichtung verstellt.

Den Vorratsbehältern 2 ist jeweils ein Füllstandssensor 13 für die Erfassung des maximal erlaubten Füllstandes und ein Füllstandssensor 14 zur Erfassung zur des minimal erlaubten Füllstandes zugeordnet. Des weiteren sind den Nachfüllleitungen 3 Drucksensoren 15 zur Ermittlung des Druckniveaus in den Nachfüllleitungen 3 und somit in den Vorratsbehältern 2 zugeordnet. Die Füllstandssensoren 13 und 14 und die Drucksensoren 15 sind über Leitungen mit einem Bordrechner 16 verbunden. Über die Leitungen melden die Füllstandsmelder 13 und 14 und die Drucksensoren 15 die von ihnen gemessenen Wert an den Bordrechner 16. Weiterhin sind der Antriebsmotor 8 für den Antrieb des Zentraldosierers 7 und der Stellmotor 12 zur Verstellung der Leitwand 10 über Steuerleitungen ebenfalls mit dem Bordrechner 13 verbunden.

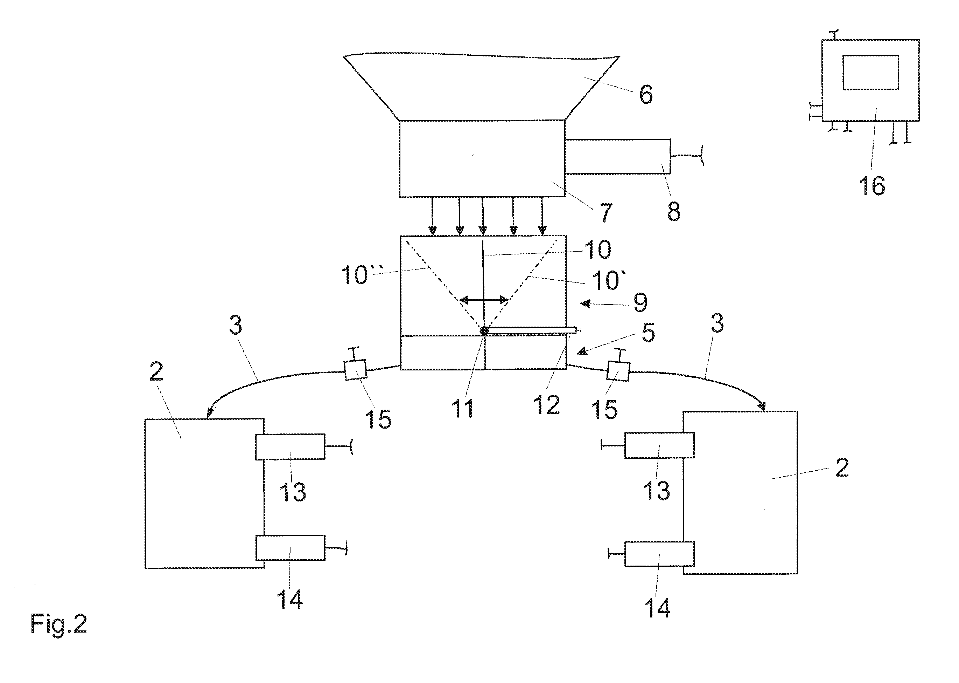

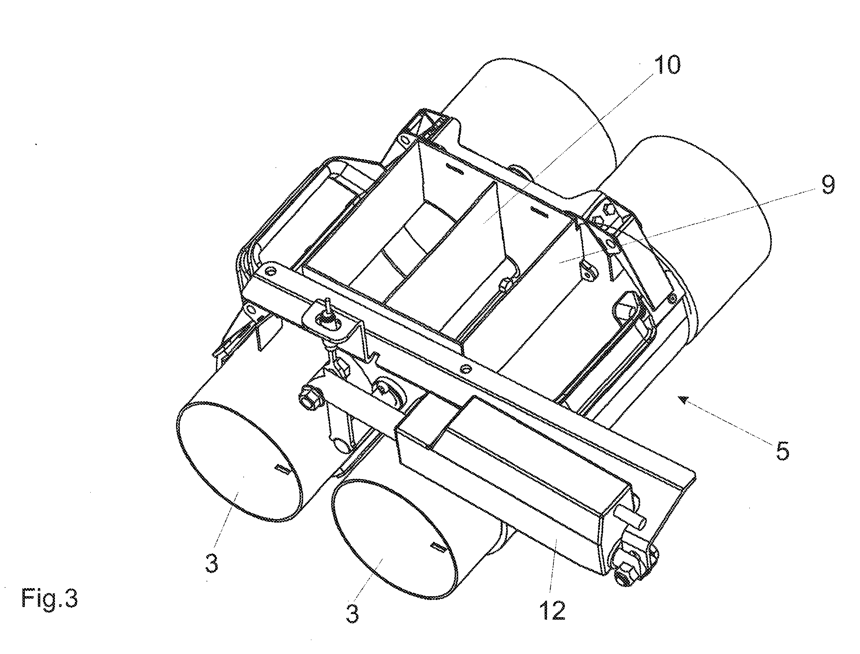

Die Leitwand 10 ist mittels der Stelleinrichtung 12 derart verstellbar, dass die der jeweiligen Nachfüllleitung 3 zugeleitetes Saatgutmenge im Verhältnis zueinander veränderbar ist. Je nach Stellung der Leitwand 10, die zwischen den Positionen 10' und 10" über die Mittelposition verstellt werden kann, lässt sich das den Nachfüllleitungen unden zugeordneten Vorratsbehältern 2 zu geleitete Saatgutmengenverhältnis einstellen. In der Mittelposition, wie die Leitwand 10 in Fig. 2 und Fig. 3 mit durchzogener Linie eingezeichnet ist, wird jeder Nachfüllleitung 3 die gleiche Saatgutmenge zugeleitet. Der Zentraldosierer 7 kann erst über den Antrieb 8 eingeschaltet werden, wenn in den Nachfüllleitungen 3 ein Mindestdruck herrscht, welcher von den Drucksensoren 15 ermittelt und an den Bordrechner 16 gemeldet wird. Hierbei sind in dem als Steuerung- und Regeleinrichtung ausgebildeten Bordrechner 16 entsprechende Druckwerte für die Ein- und Ausschaltung der Dosierelemente 7 hinterlegt. Somit ist über den Bordrechner 16 in Abhängigkeit der hinterlegten Druckwerte entsprechend der von den Drucksensoren 15 ermittelten Druckwerte erst bei Erreichen der hinterlegten Druckwerte die Antriebsvorrichtung 8 für die Dosierelemente des Zentraldosierers 7 einzuschalten.

In Abhängigkeit von den Füllstandsmeldern 13 und 14 ist die Antriebsvorrichtung 8 für die Dosierelemente des Zentraldosierers 7 ein- und auszuschalten, sowie mittels der Verstelleinrichtung 12 die verstellbare Leitwand 10 zu verstellen.

### Dies erfolgt folgendermaßen:

Wenn von den Füllstandmeldern 14, die den minimalen Füllstand in den Saatgutbehältern 2 überwachen, gemeldet wird, dass zu wenig Saatgut sich als Vorrat in den Saatgutvorratsbehältern 2 befindet, wird die Antriebsvorrichtung 8 für den Zentraldosierer 7 über den Bordrechner 16 eingeschaltet. Diese Einschaltung kann aber erst dann erfolgen, wenn von den Drucksensoren 15 ein ausreichender Druck in den Nachfüllleitungen 3 gemeldet wird. Falls eine ausreichende Nachfüllung erfolgt ist und von den Füllstandsmeldern 13 ein entsprechendes Signal an die Bordrechner 16 geliefert, schaltet der Bordrechner 16 die Antriebsvorrichtung 8 des Zentraldosierers ab.

Falls jeweils jedoch nur von einem der Füllstandsmeldern 13 eine entsprechende Meldung kommt, so wird über den Bordrechner 16 und die Stellvorrichtung 12 die Leitwand 10 entsprechend verstellt, dass nur einem der Vorratsbehälter 2, welcher noch gefüllt werden muss oder zu füllen ist, Saatgut über die jeweiligen Nachfüllleitungen 3 zugeleitet wird. Dies gilt entsprechend wenn die Sensoren 14 oder einer der Sensoren 14 ein entsprechendes Signal bei minimalem Füllstand liefert.

## Patentansprüche

1. Nachfüllsystem für mehrere mit einem Überdruck beaufschlagte, jeweils einen Saatgutvorratsbehälter (2) aufweisenden Sägehäuse (1) einer landwirtschaftlichen Sämaschine, wobei jedem Sägehäuse (1) zumindest eine mit einem über dem Atmosphärendruck liegenden Druck beaufschlagte Dosiereinrichtung zugeordnet ist, wobei jedem dem Sägehäuse (1) zugeordneten Saatgutvorratsbehälter (2) mittels zumindest einer pneumatisch beaufschlagten und oberhalb des Saatgutvorratsbehälterbereiches im Sägehäuse (1) ausmündenden Nachfüllleitung (3) das sich in einem Vorratsbehälter (6) befindliche Saatgut zugefördert wird, wobei dem Vorratsbehälter (6) zumindest ein von einer Antriebseinrichtung (8) angetriebenen Dosierelemente aufweisenden Zentraldosierer (7) zugeordnet ist, wobei der Zentraldosierer (7) das sich im Vorratsbehälter (6) befindliche Saatgut über Schleusen (5) in pneumatisch beaufschlagte Nachfüllleitungen (3) einspeist, wobei zwischen dem zumindest einem Dosierelement (7) und den Schleusen (5) der Nachfüllleitung (3) eine verstellbare Leitwand (10) angeordnet ist, wobei die Leitwand (10) mittels einer Verstelleinrichtung (12) derart verstellbar ist, dass die der jeweiligen Nachfüllleitung (3) zugeleitete Saatgutmenge im Verhältnis zueinander veränderbar sind, **dadurch gekennzeichnet, dass** dem pneumatischen System zumindest ein Drucksensor (15) zugeordnet ist, wobei über eine Steuerungs- und/oder Regeleinrichtung (16) in Abhängigkeit der hinterlegten Druckwerte entsprechend der vom Drucksensor (15) ermittelten Druckwerte erst bei Erreichen der hinterlegten Druckwerte die Antriebsvorrichtung (8) für die Dosierelemente des Zentraldosierers (7) einschaltbar ist.

2. Nachfüllsystem nach Anspruch 1, **dadurch gekennzeichnet, dass** den Saatgutvorratsbehältern (2) Füllstandsmelder (13, 14) zugeordnet sind, dass in Abhängigkeit von den Füllstandsmeldern (13, 14) die Antriebsvorrichtung (8) für die Dosierelemente des Zentraldosierers (7) ein- und ausschaltbar ist und/oder mittels der Verstelleinrichtung (12) die verstellbare Leitwand (10) verstellbar ist.

## Claims

1. Refilling system for a plurality of seed housings (1) of an agricultural sowing machine which are pressurized with an overpressure and each have a seed storage container (2), wherein each seed housing (1) is assigned at least one metering device pressurized with a pressure lying above atmospheric pressure, wherein the seed situated in a storage container (6) is conveyed to each seed storage container (2) assigned to the seed housing (1) by means of at least one pneumatically pressurized refilling line (3) which terminates in the seed housing (1) above the seed storage container region, wherein the storage container (6) is assigned at least one central metering unit (7) having metering elements driven by a drive device (8), wherein the central metering unit (7) feeds the seed situated in the storage container (6) into pneumatically pressurized refilling lines (3) via sluices (5), wherein an adjustable guide wall (10) is arranged between the at least one metering element (7) and the sluices (5) of the refilling line (3), wherein the guide wall (10) can be adjusted by means of an adjusting device (12) in such a way that the quantities of seed delivered to the respective refilling line (3) can be changed relative to one another, **characterized in that** the pneumatic system is assigned at least one pressure sensor (15), wherein an open-loop and/or closed-loop control device (16) makes it possible, as a function of the stored pressure values and corresponding to the pressure values determined by the pressure sensor (15), to switch on the drive device (8) for the metering elements of the central metering unit (7) only once the stored pressure values have been reached.

2. Refilling system according to Claim 1, **characterized in that** the seed storage containers (2) are assigned filling level indicators (13, 14), **in that** the drive device (8) for the metering elements of the central metering unit (7) can be switched on and off as a function of the filling level indicators (13, 14) and/or the adjustable guide wall (10) can be adjusted by means of the adjusting device (12).

## Revendications

1. Système de réapprovisionnement pour plusieurs boîtiers de distribution (1) d'un semoir agricole, sollicité par une surpression et présentant chacun un récipient de stockage de semences (2), au moins un dispositif de dosage sollicité avec une pression supérieure à la pression atmosphérique étant associé à chaque boîtier de distribution (1), les semences se trouvant dans un réservoir (6) étant acheminées à chaque récipient de stockage de semences (2) associé au boîtier de distribution (1) au moyen d'au moins une conduite de réapprovisionnement (3) sollicitée pneumatiquement et débouchant au-dessus de la région du récipient de stockage de semences dans le boîtier de distribution (1), au moins un doseur central (7) présentant des éléments de dosage entraînés par un dispositif d'entraînement (8) étant associé au réservoir (6), le doseur central (7) introduisant les semences se trouvant dans le réservoir (6) par le biais de sas (5) dans des conduites de réapprovisionnement (3) sollicitées pneumatiquement, une paroi directrice réglable (10) étant disposée entre l'au moins un élément de dosage (7) et les sas (5) de la conduite de réapprovisionnement (3), la paroi directrice (10) pouvant être réglée au moyen d'un dispositif de réglage (12) de telle sorte que les quantités de semences introduites dans chaque conduite de réapprovisionnement respective (3) puissent être modifiées les unes par rapport aux autres, **caractérisé en ce qu'**au moins un capteur de pression (15) est associé au système pneumatique, le dispositif d'entraînement (8) pour les éléments de dosage du doseur central (7) pouvant être enclenché par le biais d'un dispositif de commande et/ou de réglage (16) en fonction des valeurs de pression consignées correspondant aux valeurs de pression détectées par le capteur de pression (15), une fois les valeurs de pression consignées atteintes.

2. Système de réapprovisionnement selon la revendication 1, **caractérisé en ce que** l'on associe aux récipients de stockage de semences (2) des indicateurs de niveau (13, 14), **en ce qu'**en fonction des indicateurs de niveau (13, 14), le dispositif d'entraînement (8) pour les éléments de dosage du doseur central (7) peut être enclenché et déconnecté et/ou la paroi directrice réglable (10) peut être déplacée au moyen du dispositif de réglage (12).
